## Europäisches Patentamt
## European Patent Office
## Office européen des brevets

(11) Veröffentlichungsnummer: **0 416 453 A1**

(12) # EUROPÄISCHE PATENTANMELDUNG

(21) Anmeldenummer: 90116553.0

(22) Anmeldetag: 29.08.90

(51) Int. Cl.5: **B21D 51/44**

(30) Priorität: 02.09.89 DE 3929153

(43) Veröffentlichungstag der Anmeldung:
13.03.91 Patentblatt 91/11

(84) Benannte Vertragsstaaten:
**AT BE CH DE DK ES FR GB GR IT LI LU NL SE**

(71) Anmelder: **NSM MAGNETTECHNIK GMBH**
**Lützowstrasse 21**
**W-4716 Olfen-Vinnum(DE)**

(72) Erfinder: **Klahr, Reinhard**

Johann-Gottfried-Herder-Strasse 40
W-4712 Werne(DE)
Erfinder: **Czajka, Werner**
**Kleine Münsterstrasse 1**
**W-4710 Lüdinghausen(DE)**

(74) Vertreter: **Vollbach, Hans, Dipl.-Ing. et al**
**Patentanwälte Dipl.-Ing. Buschhoff Dipl.Ing**
**Hennicke Dipl.-Ing. Vollbach**
**Kaiser-Wilhelm-Ring 24**
**W-5000 Köln 1(DE)**

(54) Verfahren und Einrichtung zum Abbremsen von über eine Bewegungsbahn hinwegbewegten Aluminium-Dosendeckeln.

(57) Die Erfindung betrifft ein Verfahren zum Abbremsen von schnell bewegten Aluminium-Dosendeckeln, insbesondere von Aluminium-Dosendeckeln, die mit Hilfe von Druckluftimpulsen mit hoher Geschwindigkeit aus einer Vielfach-Stanzpresse ausgestoßen werden. Erfindungsgemäß erfolgt das Abbremsen der Dosendeckel dadurch, daß in ihnen mit Hilfe einer Bremsmagnetvorrichtung (10) auf induktivem Wege elektrische Wirbelströme erzeugt werden. Ferner ist die Erfindung auf zweckmäßige Ausführungsformen des Bremsmagnetsystems (10) gerichtet, das an einem die Dosendeckel (5) führenden Gleitkanal (3) angebaut ist.

FIG.1

## VERFAHREN UND EINRICHTUNG ZUM ABBREMSEN VON ÜBER EINE BEWEGUNGSBAHN HINWEGBEWEGTEN ALUMINIUM-DOSENDECKELN

Die Erfindung betrifft ein Verfahren und eine Einrichtung zum Abbremsen von in Folge über eine Bewegungsbahn hinwegbewegten Aluminium-Dosendeckeln, insbesondere zum Abbremsen der mit hoher Geschwindigkeit aus einer Deckelmaschine ausgestoßenen Aluminium-Dosendeckel.

Dosendeckel aus Aluminium, wie sie vor allem für den Verschluß von Getränkedosen Verwendung finden, werden als Massenerzeugnisse gefertigt, mit Hilfe von Stapelvorrichtungen zu Deckelstapeln bzw. Deckelsträngen formiert und, falls es sich um Rohdeckel (Shells) handelt, einer Weiterbearbeitungsstufe oder aber als Fertigdeckel den Abfüllbetrieben bzw. den Dosenschließmaschinen zugeführt. Für die Deckelfertigung werden Stanzpressen, in neuerer Zeit Vielfach-Stanzpressen eingesetzt, die von einem Metallcoil arbeiten. Bei den hohen Arbeitsgeschwindigkeiten der Deckelmaschinen müssen die Rohdeckel sehr rasch aus den einzelnen Werkzeugstufen ausgestoßen werden. Neuerdings erfolgt dies bei den Vielfach-Stanzpressen mit Hilfe von Druckluft-Impulsen. Diese erteilen den Deckelwerkstücken eine außerordentlich hohe Ausstoßgeschwindigkeit, die im übrigen nicht nur abhängig ist von der Stärke des Druckluft-Impulses, sondern unter anderem auch vom Auftreffwinkel des Druckluftstoßes, den Reibungsverhältnissen zwischen Werkstück und Werkzeug usw. Die hohe Deckel ausstoßgeschwindigkeit macht es erforderlich, bei im kurzen Abstand zu den Werkzeugen angeordneten Folgewerkzeugstufen synchron gesteuerte Fangelemente anzuordnen, die Rückpralleffekte u. dgl. unterdrücken. Außerdem werden elektronische Einzelwerkzeug-Überwachungen eingesetzt, die bei Fehlfunktionen der Fangelemente die Presse augenblicklich stillsetzen.

Die Massenfertigung der Dosendeckel mit hohen Taktgeschwindigkeiten verlangt entsprechend große Arbeitsgeschwindigkeiten in den der Presse nachgeschalteten Einrichtungen. Dies bedeutet auch große Geschwindigkeiten im Deckeltransfer. Werden Dosendeckel mit großen Geschwindigkeiten befördert, wie dies vor allem beim Ausstoß der Deckel aus Deckelmaschinen bzw. Pressen mittels Druckluft-Impulsen der Fall ist, so können sich insbesondere bei dichter Deckelfolge auf dem Förderweg zu einer nachgeschalteten Betriebsvorrichtung, z. B. zu einem Deckelstapler, Schwierigkeiten und Betriebsstörungen einstellen. Es kann hier zu unkontrollierten Deckelbewegungen, zu "Einholungen" der langsameren Deckel durch nachfolgende schnellere Deckel, zu "Deckel-Schindelungen "und ggf. auch zu schädlichen Rückprall-Effekte beim Zusammenstoß von Deckeln oder beim Auftreffen derselben gegen Hindernisse am Ende des Transferweges bzw. der Bewegungsbahn kommen.

Aufgabe der Erfindung ist es, ein technisches einfaches und leicht zu beherrschendes Verfahren zu schaffen, mit dem sich auch in rascher Folge und mit großer Geschwindigkeit über eine Bewegungsbahn bewegende Aluminium-Dosendeckel, insbesondere die aus einer Deckelmaschine bzw. einer Vielfach-Stanzpresse mit hoher Geschwindigkeit ausgestoßenen Aluminium-Dosendeckel, zuverlässig und deckelschonend abbremsen bzw. in ihrer Bewegung dämpfen lassen, wobei Deckelkollisionen, Deckel-Einholungen, Deckel-Schindelungen und / oder die genannten Rückprall-Effekte unterdrückt werden sollen, jedenfalls aber ein ungestörter und insbesondere für die Stapelung gut beherrschbarer Deckelstrom erreicht werden kann. Ferner ist die Erfindung auf eine zweckmäßige Einrichtung zur Abbremsung bzw. Dämpfung der Bewegung von Aluminium-Dosendeckeln gerichtet.

Die vorgenannte Aufgabe wird mit dem erfindungsgemäßen Verfahren dadurch gelöst, daß die Dosendeckel durch in ihnen induktiv erzeugte elektrische Wirbelströme in ihrer Bewegungsgeschwindigkeit abgebremst werden.

Nach dem erfindungsgemäßen Verfahren wird also mit einer Wirbelstromdämpfung der Aluminium-Dosendeckel gearbeitet, was sich mit Hilfe vergleichsweise einfacher Magnetsysteme erreichen läßt. Dabei wird die den bewegten Aluminium-Dosendeckeln innewohnende kinetische Energie durch die induktiv im Aluminium-Werkstoff erzeugten Wirbelströme in eine entsprechende Bremsenergie umgewandelt. Das Abbremsen bzw. die Dämpfung der Bewegungsgeschwindigkeit der Dosendeckel erfolgt berührungslos und somit verschleißfrei. Zugleich ergibt sich der Vorteil, daß mit der Wirbelstromdämpfung schneller bewegte Dosendeckel (oder Dosen- Rohdeckel) stärker gebremst werden als langsamer bewegte Dosendeckel, da das sich einstellende Bremsmoment in quadratischer Abhängigkeit steht zu der Deckelgeschwindigkeit.

Bei dem erfindungsgemäßen Verfahren wird zweckmäßig so vorgegangen, daß die Aluminium-Dosendeckel (Rohdeckel oder Fertigdeckel) während ihres freien Durchgangs durch einen Gleitkanal in ihrer Bewegung auf Grund des Wirbelstromeffektes gedämpft werden, wobei der Gleitkanal lediglich der Deckelführung dient. Der Gleitkanal kann horizontal verlaufen oder auch zur Horizontalen unter unterschiedlichen Winkeln geneigt sein.

Das erfindungsgemäße Verfahren wird vorzugsweise derart durchgeführt, daß die bewegten Aluminium-Dosendeckel durch Wirbelstromdämpfung auf eine Restgeschwindigkeit abgebremst werden, wobei sie unter Ausnutzung der Restgeschwindigkeit dem Einlauf einer nachgeschalteten Vorrichtung, vorzugsweise einer Deckel-Stapelvorrichtung, wie vor allem einer Unterdruck-Stapelvorrichtung, mit vertikaler Stapelbildung, zugeführt werden. Die Wirbelstromdämpfung braucht im übrigen nur auf einer Teillänge der Bewegungsbahn bzw. des Transferweges der Deckel zur Wirkung kommen. Bei einer der Deckelmaschine bzw. dem Pressenausgang nachgeschalteten Deckel-Stapelvorrichtung wird die Zone der Wirbelstromdämpfung im Abstand vom Pressenausgang im Einlaufbereich der Stapelvorrichtung angeordnet.

Insgesamt gelingt es mit dem erfindungsgemäßen Verfahren, auch mit hohen Geschwindigkeiten bewegte Aluminium-Dosendeckel deckelschonend auf eine für die weitere Behandlung günstige Geschwindigkeit abzubremsen, insbesondere auf eine Geschwindigkeit, mit der sich der Deckelstrom mit Hilfe herkömmlicher Deckelstapler zu Deckelsträngen formieren läßt.

Die erfindungsgemäße Einrichtung kennzeichnet sich dadurch, daß an einem Gleitkanal für die Aluminium-Dosendeckel ein Bremsmagnetsystem angeordnet ist, dessen magnetische Kraftlinien die Bewegungsbahn der Dosendeckel innerhalb des Gleitkanals durchdringen, so daß in den im Gleitkanal bewegten Aluminium-Dosendeckel Wirbelströme induziert werden, die deren Bewegung dämpfen. Für das Bremsmagnetsystem kann ein einfaches Dauermagnetsystem mit einer Reihe von entlang des Gleitkanals angeordneten Dauermagneten Verwendung finden. Das Bremsmagnetsystem kann unterhalb oder auch oberhalb des Gleitkanals oder auch beidseitig des Gleitkanals angeordnet werden, vorzugsweise derart, daß eine Justierung möglich ist, um die Brems- bzw. Dämpfungswirkung exakt einstellen zu können. Der genannte Gleitkanal besteht zweckmäßig aus einem unmagnetischen Material, wie vor allem rostfreien Stahl od. dgl.

Wie erwähnt, ergeben sich besondere Vorteile dann, wenn die erfindungsgemäße Wirbelstrombremse zur Dämpfung der Zuführungsgeschwindigkeit der Aluminium-Dosendeckel zu einem Deckelstapler eingesetzt wird. Das Bremsmagnetsystem wird hierbei zweckmäßig unmittelbar vor dem Einlauf des Deckelstaplers am Gleitkanal angeordnet. Für den Deckelstapler kann ein einfacher Unterdruck-Deckelstapler bekannter Art Verwendung finden. Das erfindungsgemäß vorgesehene Bremsmagnetsystem weist zweckmäßig in einem gemeinsamen, am Gehäusekanal angebauten Gehäuseteil eine Reihe von im Abstand zueinander liegenden Dauermagneten auf. Das Gehäuseteil kann dabei als Eisen-Rückschlußgehäuse ausgeführt sein, wobei die Dauermagnete in wechselnder Folge mit ihren Nord- und Südpolen dem Eisen-Rückschlußgehäuse bzw. dem dieses an der Gegenseite abdeckenden Gleitkanal zugeordnet sind. In diesem Fall ergibt sich eine weitpolige Magnet-Anordnung.

Stattdessen kann das vorgenannte Gehäuseteil aber auch aus einem unmagnetischen Werkstoff, z. B. aus Kunststoff oder Leichtmetall, bestehen, wobei die in ihm in Reihe angeordneten Dauermagnete mit ihren ungleichnamigen Polen einander zugewandt sind und zwischen den Dauermagneten Polscheiben od. dgl. angeordnet sind, die die magnetischen Kraftfelder zu dem Gleitkanal hin schließen.

Die vorgenannten Gehäuseteile werden zweckmäßig in ihrem Abstand zum Gleitkanal einstellbar gelagert, was sich beispielsweise mit einer Schraubenjustierung od. dgl. erreichen läßt. Auf diese Weise läßt sich die Dämpfungswirkung des Bremsmagnetsystems in Anpassung an die Betriebsparameter einstellen. Es kann auch zweckmäßig sein, das Bremsmagnetsystem in Längsrichtung des Gleitkanals verstellbar anzuordnen, so daß sich die Bremszone des Gleitkanals einstellen läßt.

Die Erfindung wird nachfolgend im Zusammenhang mit den in der Zeichnung gezeigten Ausführungsbeispielen näher erläutert. In der Zeichnung zeigen:

Fig. 1, 2 und 3 jeweils in starker schematischer Vereinfachung eine erfindungsgemäße Einrichtung mit dem zwischen Pressenausgang und einer Deckel-Stapelvorrichtung angeordneten Gleitkanal nebst zugeordnetem Bremsmagnetsystem;

Fig. 4 in größerem Maßstab und in einem Teil-Längsschnitt durch den Gleitkanal eine Ausführungsform eines erfindungsgemäßen Bremsmagnetsystems;

Fig. 5 in der Darstellung der Fig. 4 eine geänderte Ausführungsform des Bremsmagnetsystems;

Fig. 6 in größerem Maßstab einen einzelnen Dosendeckel im Schnitt.

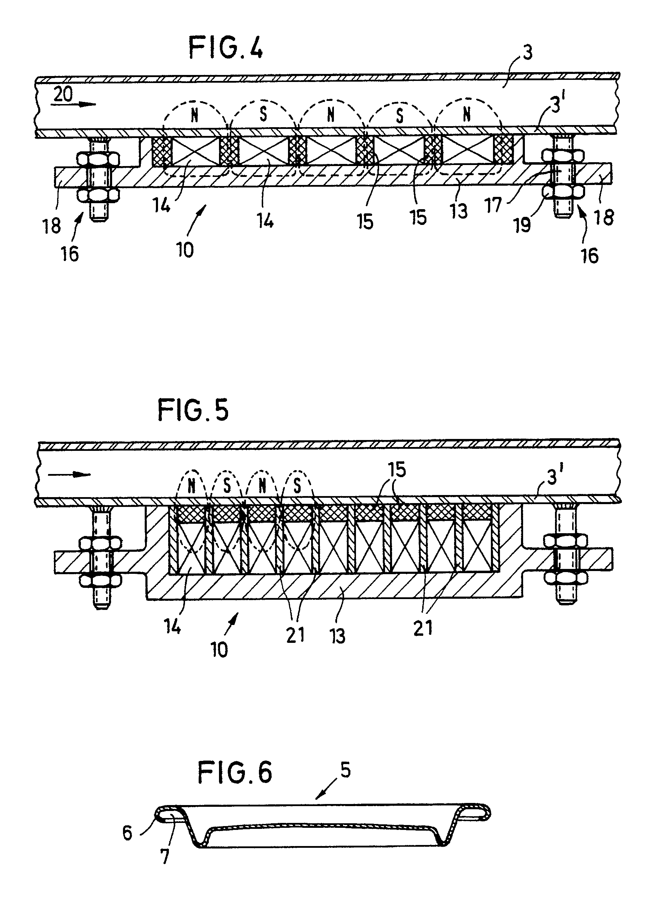

In der Zeichnung ist mit 1 der Ausgang einer Deckelmaschine 2, mit 3 ein Gleitkanal und mit 4 eine Dosendeckel-Stapelvorrichtung bezeichnet. Die Deckelmaschine 2 besteht im bevorzugten Anwendungsfall aus einer Vielfach-Stanzpresse mit einer mehr oder weniger großen Anzahl an Werkzeugsätzen für die Herstellung der Aluminium-Rohdeckel 5, von denen ein Einzeldeckel typischer Formgebung in Fig. 6 gezeigt ist. Bei den bekannten Vielfach-Stanzpressen werden die Rohdeckel 5 aus Stanzteilen hergestellt, die unmittelbar aus einem Aluminiumcoil ausgestanzt und in einer weiteren Stufe innerhalb der Presse mit einer Randumformung 6 versehen werden. In den Raum 7 an der Unterseite der Umformung 6 kann eine Dichtungsmasse als Deckeldichtung eingebracht werden.

Die Dosendeckel 5 verlassen den Ausgang 1 der Deckelmaschine 2 mit hoher Ausstoßgeschwindigkeit; sie bewegen sich durch den Gleitkanal 3 hindurch und gelangen schließlich in den Einlaufbereich 8 der Stapelvorrichtung 4, in der die Aluminium-Dosendeckel 5 zu einem vertikalen Deckelstapel bzw. Deckelstrang 9 gestapelt werden. Der Ausstoß der Dosendeckel 5 aus der Deckelmaschine 2 kann, wie bekannt, mit Hilfe von Druckluft-Impulsen erfolgen, die den Deckeln eine außerordentlich hohe Ausstoßgeschwindigkeit verleiht, die abhängig ist von verschiedenen Parametern, z. B. der Wirkungsrichtung des Druckluft-Impulses gegenüber dem Deckel, der Deckelhaftung im Werkzeug usw. Bei den hohen Taktgeschwindigkeiten der Stanzpressen muß entsprechend mit hohen Ausstoßgeschwindigkeiten der Aluminium-Dosendeckel 5 gearbeitet werden. Es versteht sich, daß bei einer Stanzpresse mit Vielfach-Werkzeugsystem jeder einzelnen Werkzeugstation ein eigener Ausgang 1 mit Werkstückableitung über einen Gleitkanal 3 zu einer Stapelvorrichtung 4 zugeordnet ist.

Die den Pressen-Auslauf 1 verlassenden Aluminium-Dosendeckel 5 bewegen sich mit hohen Geschwindigkeiten durch den zur Deckel-Stapelvorrichtung 4 hin geneigten Gleitkanal 3. Sie werden vor Erreichen des Einlaufs der Deckel-Stapelvorrichtung 4 mit Hilfe eines Bremsmagnetsystems 10 abgebremst, das an dem Gleitkanal 3 angebaut ist. Das Bremsmagnetsystem 10 erzeugt in den sich durch den Gleitkanal 3 geführt hindurchbewegenden Aluminium-Dosendeckeln 5 auf induktivem Wege elektrische Wirbelströme, die einen Bremseffekt auf die Dosendeckel ausüben. Hierbei werden die zunächst rasch bewegten Dosendeckel 5 im Bereich des Bremsmagnetsystems 10 auf eine solche Restgeschwindigkeit abgebremst, daß die Dosendeckel störungsfrei und ohne Rückprall in den Einlauf 8 und damit in den Stapelraum der Dosendeckel-Stapelvorrichtung 4 gelangen können, in der sie sich zu dem Deckelstapel 9 aufeinanderlegen.

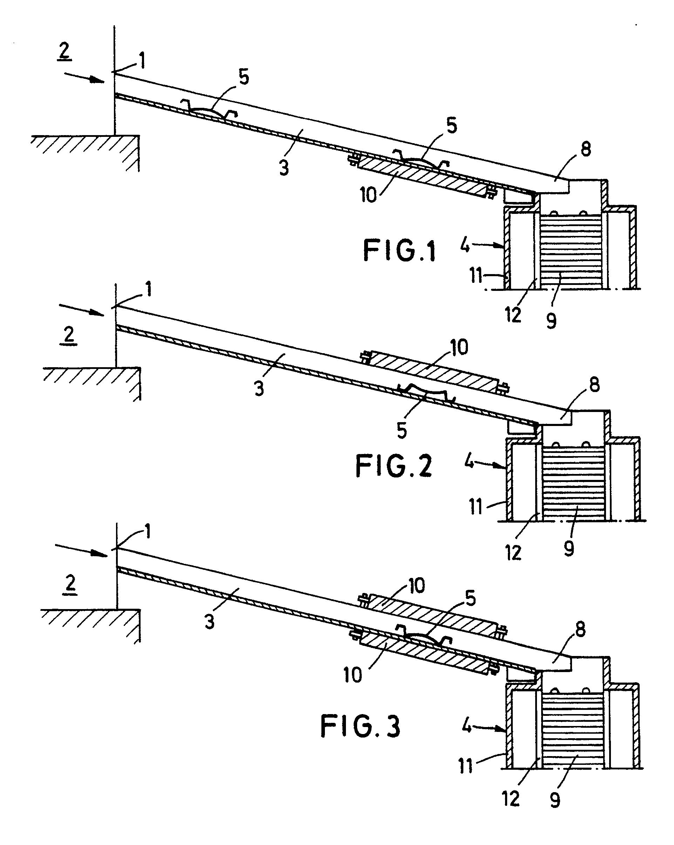

Gemäß Fig. 1 ist das Bremsmagnetsystem 10 an der Unterseite des Gleitkanals 3 angebaut, während sich bei der Ausführungsform nach Fig. 2 das Bremsmagnetsystem 10 an der Oberseite des Gleitkanals 3 befindet. Fig. 3 zeigt eine Anordnung, bei der jeweils ein Bremsmagnetsystem 10 zu beiden Seiten des Gleitkanals 3, also an dessen Unterseite und dessen Oberseite angeordnet ist.

Für die Deckel-Stapelvorrichtung 4 können Deckelstapler bekannter Art verwendet werden. Besonders eignen sich hierfür die bekannten Unterdruck-Stapelköpfe, die einen Außenmantel 11 aufweisen, in den sich ein den vertikalen Stapelkanal bildender geschlitzter Innenmantel 12 befindet, wobei der Raum zwischen Außenmantel 11 und Innenmantel 12 und damit auch der Stapelraum unter einem Unterdruck gehalten wird, der den Stapelvorgang begünstigt.

In den Fig. 4 und 5 sind zwei vorteilhafte Ausführungsformen eines erfindungsgemäßen Bremsmagnetsystems 10 gezeigt. Das Bremsmagnetsystem 10 gemäß Fig. 4 weist ein flaches, etwa kastenförmiges Gehäuseteil 13 auf, das eine Reihe von im Abstand zueinander liegende Dauermagnete 14 mit zwischen diesen liegenden unmagnetischen Füllkörpern oder Füllmaterial 15 aufnimmt. Das Gehäuseteil 13 ist dabei aus Stahl gefertigt; es bildet ein Eisen-Rückschlußgehäuse. Die Dauermagnete 14 sind innerhalb der Magnetreihe in wechselnder Folge mit ihren Nord- und Südpolen N und S dem Eisen-Rückschlußgehäuse 13 bzw. dem Gleitkanal 3 zugeordnet, der aus unmagnetischem Werkstoff, vorzugsweise rostfreiem Stahl, besteht. Der Boden 3′ des Gleitkanals 3 schließt das flache Gehäuseteil 13 an seiner Öffnungsseite, wobei sich die Magnete 14 mit ihren wechselnden Polen N und S gegen den Boden 3′ legen, wodurch sich die in Fig. 4 angedeuteten magnetischen Kraftfelder im Gleitkanal 3 aufbauen. Das Gehäuseteil 13 ist am Gleitkanal 3 justierbar angeschlossen, beim gezeigten Ausführungsbeispiel mit Hilfe von Schraubenjustierungen 16. Dabei sind am Gleitkanal 3 Schrauben- bzw. Gewindebolzen 17 befestigt, die Schraubenlöcher an Anschlußflanschen 18 des Gehäuseteils 13 durchfassen, wobei die Schraubverbindungen mit Hilfe der Muttern 19 gesichert werden. Mit Hilfe der Muttern 19 läßt sich zugleich eine Einstellung des Abstandes des Bremsmagnetsystems 10 gegenüber dem Gleitkanal 3 und damit eine Justierung der Bremswirkung erreichen. Die in Pfeilrichtung 20 durch den Gleitkanal 3 hindurchbewegten Aluminium-Dosendeckel 5 durchschneiden die magnetischen Kraftlinien des Bremsmagnetsystems, wodurch in den Dosendeckeln ein Wirbelstrom induziert wird, der einen Bremseffekt hat. Dabei ist die Bremswirkung umso größer, je größer die Bewegungsgeschwindigkeit der Dosendeckel 5 innerhalb des Gleitkanals 3 ist. Das bedeutet, daß Aluminium-Dosendeckel 5, die sich schneller durch den Gleitkanal 3 hindurchbewegen, stärker abgebremst werden als sich langsamer durch den Gleitkanal bewegende Dosendeckel. Auf diese Weise gelingt es, sämtliche in kurzer Folge durch den Gleitkanal 3 hindurchgelangende Aluminium-Dosendeckel 5 unabhängig von ihrer Eintrittsgeschwindigkeit, mit der sie am Pressen-Auslauf 1 in den Gleitkanal 3 eintreten, auf eine im wesentliche gleichmäßige Restgeschwindigkeit abzubremsen, mit der sie dann ungehindert in den Deckelstapler gelangen können. Insgesamt läßt sich der den Auslauf 1 verlassende Deckelstrom auch bei stark unterschiedlichen Deckelgeschwindigkeiten und bei sehr rascher Deckelfolge einwandfrei beherrschen und störungsfrei in die Dosendeckel-Stapelvorrichtung 4 überleiten.

Während Fig. 4 ein Bremsmagnetsystem 10 mit weitpoliger Magnet-Anordnung zeigt, ist in Fig. 5 ein Bremsmagnetsystem 10 mit engpoliger Magnetanordnung dargestellt. Das Gehäuseteil 13 besteht hier aus einem unmagnischen Werkstoff, z. B. aus Kunststoff oder Leichtmetall. Die Dauermagnete 14 sind in diesem Fall mit ihrem ungleichnamigen Magnetpolen N und S innerhalb der Magnetreihe einander zugewandt, wobei zwischen den Dauermagneten 14 Eisenpolscheiben 21 od. dgl. angeordnet sind, die endseitig mit dem Boden 3' des aus rostfreiem Stahl gefertigten Gleitkanals 3 in Berührung stehen. Mit 15' sind die unmagnetischen Füllkörper bezeichnet, die hier nicht zwischen den benachbarten Dauermagneten, sondern zwischen diesen und dem Gleitkanal 3 angeordnet sind. Im übrigen entspricht das Bremsmagnetsystem 10 nach Fig. 5 in seiner Anordnung und Wirkung demjenigen nach Fig. 4.

Wie erwähnt, läßt sich die Stärke der Wirbelstromdämpfung durch Justierung des Bremsmagnetsystems 10 gegenüber dem Gleitkanal 3 einstellen. Auch kann es zweckmäßig sein, das oder die Bremsmagnetsysteme 10 in Längsrichtung des Gleitkanals 3 verstellbar an diesem anzuordnen. Der Gleitkanal 3 kann auch neigungsveränderlich zwischen Pressenauslauf 1 und Deckelstapelvorrichtung 4 angeordnet werden. Er kann aus einer einfachen U-förmigen Rinne oder aber auch aus einem geschlossenen rohrförmigen Kanal bestehen. Vorzugsweise wird er von einer Rinne gebildet, die an der Oberseite durch eine Abdeckung, vorzugsweise eine Klarsicht-Abdeckung, abgedeckt wird. Die den Wirbelstrom-Effekt erzeugenden Bremsmagnetsysteme 10 können, wie erwähnt, in Abhängigkeit von der Deckelgröße und / oder Deckellage entweder nur unterhalb oder nur oberhalb oder aber auch beiderseits des Gleitkanals vorgesehen werden. Wie die Figuren 1 bis 3 zeigen, bewegen sich die Aluminium-Dosendeckel 5 mit ihrer Ober- und Unterseite nach unten in Flachlage durch den Gleitkanal 3 und die Dämpfungszone hindurch.

## Ansprüche

1. Verfahren zum Abbremsen von in Folge über eine Bewegungsbahn hinwegbewegten Aluminium-Dosendeckeln, insbesondere zum Abbremsen der mit hoher Geschwindigkeit aus einer Deckelmaschine ausgestoßenen Aluminium-Dosendeckel, **dadurch gekennzeichnet,** daß die Aluminium-Dosendeckel (5) durch in ihnen induktiv erzeugte elektrische Wirbelströme in ihrer Bewegungsgeschwindigkeit abgebremst werden.

2. Verfahren nach Anspruch 1, **dadurch gekennzeichnet,** daß die bewegten Dosendeckel (5) durch Wirbelstromdämpfung eines Bremsmagnetsystems (10) auf eine Restgeschwindigkeit abgebremst werden, wobei sie unter Ausnutzung der Restgeschwindigkeit dem Einlauf (8) einer nachgeschalteten Vorrichtung, vorzugsweise einer Deckel-Stapelvorrichtung (4), wie vor allem einer Unterdruck-Stapelvorrichtung mit vertikaler Stapelbildung, zugeführt werden.

3. Verfahren nach Anspruch 1 oder 2, **dadurch gekennzeichnet,** daß die Wirbelstromdämpfung nur auf einer Teillänge der Bewegungsbahn der Deckel (5) bewirkt wird, wobei sich die Zone der Wirbelstromdämpfung im Abstand vom Pressenauslauf (1) im Einlaufbereich der nachgeschalteten Vorrichtung bzw. der Deckel-Stapelvorrichtung (4) befindet.

4. Verfahren nach einem der Ansprüche 1 bis 3, **dadurch gekennzeichnet,** daß die Aluminium-Dosendeckel (5) auf der Bewegungsbahn in einem Gleitkanal (3) geführt werden.

5. Einrichtung zur Durchführung des Verfahrens nach einem oder mehreren der Ansprüche 1 bis 4, **dadurch gekennzeichnet,** daß an einem Gleitkanal (3) für die Aluminium-Dosendeckel (5) ein Bremsmagnetsystem (10) angeordnet ist, dessen magnetische Kraftlinien die Bewegungsbahn der Dosendeckel (5) innerhalb des Gleitkanals durchdringen.

6. Einrichtung nach Anspruch 5, **dadurch gekennzeichnet,** daß das Bremsmagnetsystem (10) aus einem Dauermagnetsystem mit einer Reihe von entlang des Gleitkanals (3) angeordneten Dauermagneten (14) besteht.

7. Einrichtung nach Anspruch 5 oder 6, **dadurch gekennzeichnet,** daß das Bremsmagnetsystem (10) unterhalb oder oberhalb des Gleitkanals (3) angeordnet ist.

8. Einrichtung nach Anspruch 5 oder 6, **dadurch gekennzeichnet,** daß Bremsmagnetsysteme (10) beidseitig des Gleitkanals (3) angeordnet sind.

9. Einrichtung nach einem der Ansprüche 5 bis 8, **dadurch gekennzeichnet,** daß das Bremsmagnetsystem (10) gegenüber dem Gleitkanal (3) justierbar ist.

10. Einrichtung nach einem der Ansprüche 5 bis 9, **dadurch gekennzeichnet,** daß der Gleitkanal (3) geneigt verläuft.

11. Einrichtung nach einem der Ansprüche 5 bis 10, **dadurch gekennzeichnet,** daß der Gleitkanal (3) aus unmagnetischem Material, vorzugsweise rostfreiem Stahl, besteht.

12. Einrichtung nach einem der Ansprüche 5 bis 10, **dadurch gekennzeichnet,** daß das Bremsmagnetsystem (10) vor dem Einlauf (8) einer Deckel-Stapelvorrichtung (4), vorzugsweise eines Unterdruck-Deckelstaplers, am Gleitkanal (3) angeordnet ist.

13. Einrichtung nach einem der Ansprüche 5 bis 12, **dadurch gekennzeichnet,** daß in einem gemeinsamen, am Gleitkanal (3) angebauten Gehäuseteil (13) eine Reihe von im Abstand zueinander liegenden Dauermagneten (14) angeordnet ist.

14. Einrichtung nach Anspruch 13, **dadurch gekennzeichnet,** daß das Gehäuseteil (13) als Eisen-Rückschlußgehäuse ausgeführt ist, wobei die Dauermagnete (14) in wechselnder Folge mit ihren Nord-und Südpolen dem Eisen-Rückschlußgehäuse bzw. dem dieses an der Gegenseite abdeckenden Gleitkanal (3) zugewandt sind.

15. Einrichtung nach Anspruch 13, **dadurch gekennzeichnet,** daß das Gehäuseteil (13) aus einem unmagnetischen Werkstoff, z. B. Kunststoff oder Leichtmetall, besteht und die in ihm in Reihe liegenden Dauermagnete (14) mit ihren ungleichnamigen Polen einander zugewandt sind, wobei zwischen den Dauermagneten (14) Eisenpolscheiben-(21) od. dgl. angeordnet sind, die die magnetischen Kraftlinien über dem Gleitkanal (3) schließen.

16. Einrichtung nach einem der Ansprüche 13 bis 15, **dadurch gekennzeichnet,** daß das Gehäuseteil (13) in seinem Abstand zum Gleitkanal (3) einstellbar ist, z. B. mittels einer Schraubenjustierung (16) od. dgl.

17. Einrichtung nach einem der Ansprüche 15 und 16, **dadurch gekennzeichnet,** daß das Bremsmagnetsystem (10) bzw. sein Gehäuseteil (13) in Längsrichtung des Gleitkanals (3) einstellbar ist.

18. Einrichtung nach einem der Ansprüche 5 bis 17, **dadurch gekennzeichnet,** daß der Gleitkanal (3) aus einer Rinne besteht, die an der Oberseite durch eine entfernbare Abdeckung, vorzugsweise eine Klarsicht-Abdeckung, abgedeckt ist.

EP 0 416 453 A1

FIG.1

FIG.2

FIG.3

7

# FIG.4

# FIG.5

# FIG.6

Europäisches Patentamt

**EUROPÄISCHER RECHERCHENBERICHT**

Nummer der Anmeldung

EP 90116553.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - A1 - 3 207 971</u><br>(THYSSEN EDELSTAHLWERKE AG)<br> * Anspruch 1,2; Fig. 1 *<br>-- | 1,2,4,<br>6,7 | B 21 D 51/44 |
| A | <u>GB - A - 1 531 169</u><br>(AMERICAN CAN COMPANY)<br> * Ansprüche 15,16; Seite 4,<br>Zeilen 24-38; Fig. 1-5 *<br>-- | 2 | |
| A | <u>EP - A2 - 0 130 078</u><br>(REYNOLDS METALS COMPANY)<br> * Seite 5, Zeilen 18-21;<br>Fig. 1 *<br>---- | 4,10,<br>18 | |

|  |
|---|
| RECHERCHIERTE SACHGEBIETE (Int Cl⁵) |
| B 67 B   3/00<br>B 21 D 43/00<br>B 21 D 45/00<br>B 21 D 51/00<br>B 65 G 54/00 |

Der vorliegende Recherchenbericht wurde für alle Patentansprüche erstellt.

| Recherchenort | Abschlußdatum der Recherche | Prüfer |
|---|---|---|
| WIEN | 15-11-1990 | BISTRICH |

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82